# EUROPÄISCHE PATENTANMELDUNG

(11) **EP 0 880 008 A2**
(43) Veröffentlichungstag der Anmeldung: **25.11.1998**
(21) Anmeldenummer: 98109185.3
(22) Anmeldetag: 20.05.1998
(51) Int. Cl.: G01B 11/14, G01B 11/04, G01C 1/00

(54) **Verfahren und Messanordnung zur berührungslosen Messung des Abstandes und der Breitenausdehnung eines Gegenstandes zu einer spiegelnden Oberfläche**

(30) Priorität: 21.05.1997 DE 19721131
(71) Anmelder: Salzgitter AG, 31226 Peine (DE)
(72) Erfinder: Frey, Herbert, Prof. Dr., 89564 Nattheim (DE); Speth, Winfried, Prof. Dr., 89077 Ulm (DE)
(74) Vertreter: Zietsch, Anita, Dipl.-Ing.

(57) **Zusammenfassung**

Die Erfindung betrifft ein Verfahren und eine Meßanordnung zur berührungslosen Messung des Abstandes und der Bandbreite eines Gegenstandes zu einer spiegelnden Oberfläche, die auf einem sich bewegenden Band entsteht.
Der Abstand 7 des Gegenstandes 1 zur spiegelnden Oberfläche 2 und die Bandbreite werden kontinuierlich dargestellt, angezeigt und als Signal weiterverarbeitet.
Auf dem Gegenstand 1 bzw. in einer festen Position zum Gegenstand ist ein Meßlineal 4 angebracht, das auf der spiegelnden Oberfläche 2 des bewegten Bandes 3 ein Spiegelbild erzeugt. Das Meßlineal 4 und sein Spiegelbild 6 werden von einer Kamera 5 unter einem beliebigen Winkel 10 erfaßt.

## Beschreibung

Die Erfindung betrifft ein Verfahren und eine Meßanordnung zur berührungslosen Messung des Abstandes eines Gegenstandes zu einer spiegelnden Oberfläche. Mit der Einrichtung kann gleichzeitig auch die Breite der spiegelnden Oberfläche gemessen werden. Die spiegelnde Oberfläche kann z. B. auf einem sich bewegenden Band entstehen.

Bekanntermaßen wird die berührungslose Abstandsmessung mittels Lasertriangulation, Ultraschall oder induktiver Messung durchgeführt.

Bei der Lasertriangulation entstehen sich ständig ändernde Reflektionswinkel der Laserstrahlen, weil sich das bewegende Band in seiner Position verändert, d. h., daß eine fest positionierte Kamera nur einen geringen Teil der reflektierten Laserstrahlen erfaßt. Deshalb werden mehrere Kameras verwendet, was zu erhöhtem Geräteaufwand und einer komplizierten Mechanik führt. Außerdem muß der Laser ständig saubergehalten werden. Beim Einsatz von zwei oder mehreren Lasern vervielfacht sich dieser Aufwand.

Die Ultraschallmessung ist ein sehr genaues Meßverfahren, reagiert aber auf Lärm und sogenannte Schlieren, die in einer hohen Umgebungstemperatur entstehen, sensibel, so daß es ständig zu Ausfällen kommt.

Die induktive Abstandsmessung hat den Nachteil, daß die unterschiedlichen Blechdicken der sich bewegenden Bänder die Messung beeinflussen. Außerdem muß der induktive Meßkopf eine vorgegebene Temperatur haben, was bei einem wärmeren Meßumfeld dazu führt, daß der induktive Meßkopf gekühlt werden muß.

Aufgabe der Erfindung ist es, den Abstand eines Gegenstandes zu einem sich bewegenden Band, welches eine spiegelnde Oberfläche aufweist, berührungslos und selbstkalibrierend zu messen. Weiterhin soll die Breitenausdehnung ebenfalls berührungslos gemessen werden. Dabei sollen das Meßverfahren und die Meßanordnung unempfindlich gegenüber hohen Umgebungstemperaturen und/oder Lärm sein.

Erfindungsgemäß wird ein Verfahren zur berührungslosen Messung des Abstandes eines Gegenstandes zu einer spiegelnden Oberfläche beschrieben, bei dem die spiegelnde Oberfläche auf einem sich bewegenden Band entstehen kann. Der Abstand des Gegenstandes zur spiegelnden Oberfläche wird kontinuierlich dargestellt, angezeigt und als Signal weiterverarbeitet. Das Meßverfahren beruht erfindungsgemäß darauf, daß auf dem Gegenstand in fester und bekannter Position zum Gegenstand ein Meßlineal mit Kalibriermaßen für den Bandabstand und die Bandbreite angebracht ist. Von einer Kamera wird das Meßlineal zusammen mit seinem auf der Bandoberfläche erzeugten Spiegelbild aufgenommen. Durch Auswertung des Kamerabildes werden der Bandabstand und die Bandbreite berechnet. Der Fehler, der aus der pespektivischen Abbildung der Kamera entsteht, wird dadurch eliminiert, daß ein Mittelwert aus Kalibrierrnaß und Spiegelbild des Kalibriermaßes gebildet wird. Unabhängig vom Winkel der Kamera kalibriert sich das System selbst.

Die Kamera kann zeitgleich eine oder mehrere Meßstellen erfassen.

Die erfindungsgemäße Meßeinrichtung zur berührungslosen Messung des Abstandes eines Gegenstandes zu einer spiegelnden Oberfläche und/oder zur Messung der Breite eines Bandes mit spiegelnder Oberfläche besteht aus einer Kamera, einem Meßlineal, einem Rechner und einem oder mehreren Bildschirmen.
Vor dem bewegten Band wird ein Meßlineal angeordnet. Das Meßlineal hat eine kontrasterzeugende Oberfläche bzw. Kante, so daß ein klares Spiegelbild des Meßlineals auf der spiegelnden Oberfläche des bewegten Bandes entsteht. Das Meßlineal ist so angebracht, daß es zum Gegenstand, dessen Abstand zum bewegten Band gemessen wird, fest zugeordnet ist oder sich direkt auf dem Gegenstand befindet. Die Kamera erfaßt das Meßlineal sowie dessen Spiegelbild, und ein Rechner wertet die erfaßte Abbildung aus. Auf einem oder mehreren Bildschirmen werden dann das Kamerabild sowie die Auswertung in Echtzeit dargestellt. Der ermittelte Abstand des Gegenstandes von der spiegelnden Oberfläche auf dem bewegten Band wird als Signal für weitere Steuerungen verwendet.

Weitere Einzelheiten der Erfindung werden im nachfolgenden Ausführungsbeispiel anhand der Figuren 1 bis 4 erläutert. Die Figuren zeigen:
- Fig. 1:: eine Meßeinrichtung,
- Fig. 2:: ein Meßlineal,
- Fig. 3:: eine Kamerasicht und
- Fig. 4:: ein Kamerabild.

Die Erfindung wird am Beispiel der Abstandsmessung zwischen Düse und Band einer Feuerverzinkungsanlage erläutert.

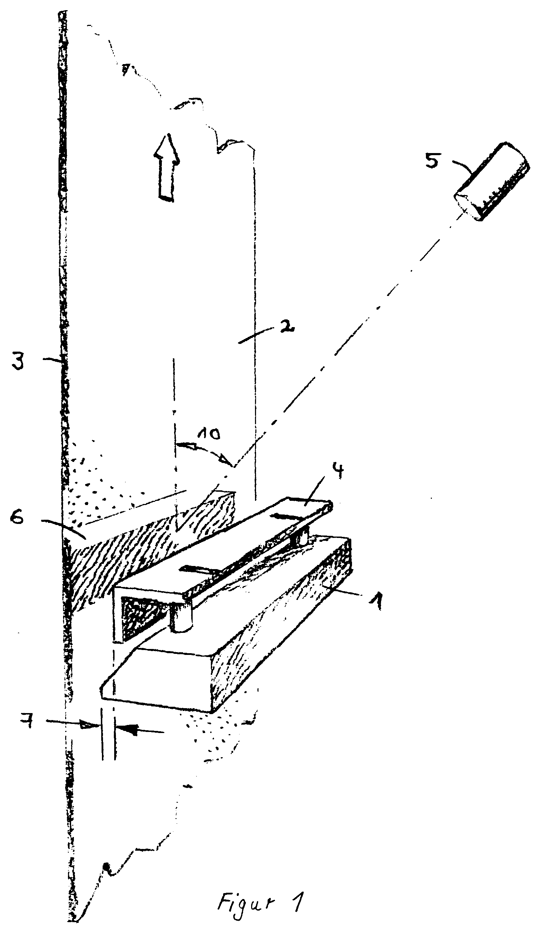

Fig. 1 zeigt die Meßeinrichtung, in der der Gegenstand 1, dessen Abstand zum sich bewegenden Band 3 gemessen werden soll, eine Abstreifdüse für die Zinkschicht ist. Die Abstreifdüse ist mit einem Meßlineal 4 fest verbunden, so daß anstelle des Abstandes der Düse zum Band 3 der Abstand Meßlineal 4 zum Band gemessen werden kann. Das geschieht mit einer Kamera 5, die das Meßlineal, zusammen mit einem Spiegelbild 6 des Meßlineals, das sich auf der spiegelnden Oberfläche 2 des bewegten Bandes 3 abbildet, erfaßt. Um die optische Meßgenauigkeit zu erhalten, wird die Kamera 5 ungefähr in der Symmetrieebene von Band 3 und Meßlineal 4 montiert. Sie erfaßt das Band 3 unter einem Winkel von etwa 45 °. Position und Winkel der Kamera müssen jedoch nicht genau bekannt sein. Der Fehler, der durch die perspektivische Verzerrung entsteht, wird dadurch eliminiert, daß alle Abstände als Mittelwert aus Original und Spiegelbild berechnet werden.

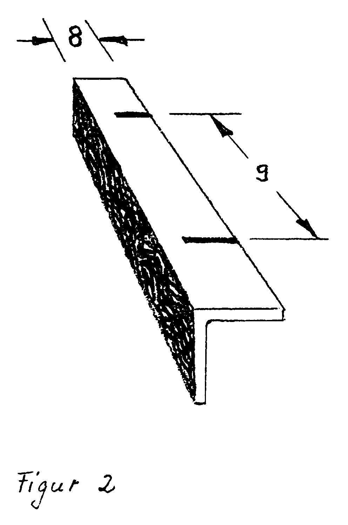

Fig. 2 zeigt das Meßlineal 4, das mit einer kontrasterzeugenden Oberfläche bzw. Kante ein scharfes Spiegelbild 6 auf dem bewegten Band 3 abbildet. Auf dem Meßlineal 4 sind weiterhin das Kalibriermaß für den Bandabstand 8 und das Kalibriermaß für die Bandbreite 9 gekennzeichnet.

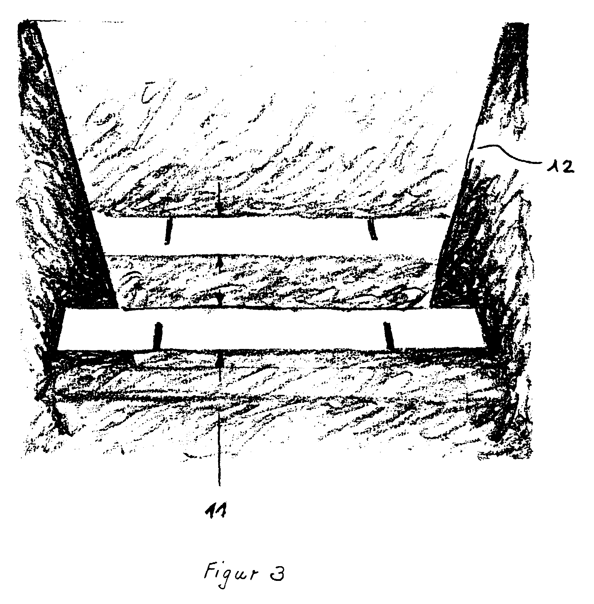

Die Kamerasicht wird in Fig. 3 gezeigt. Hier sind neben dem Meßlineal 4 und dessen Spiegelbild 6 auch eine Meßstelle 11 zu erkennen.

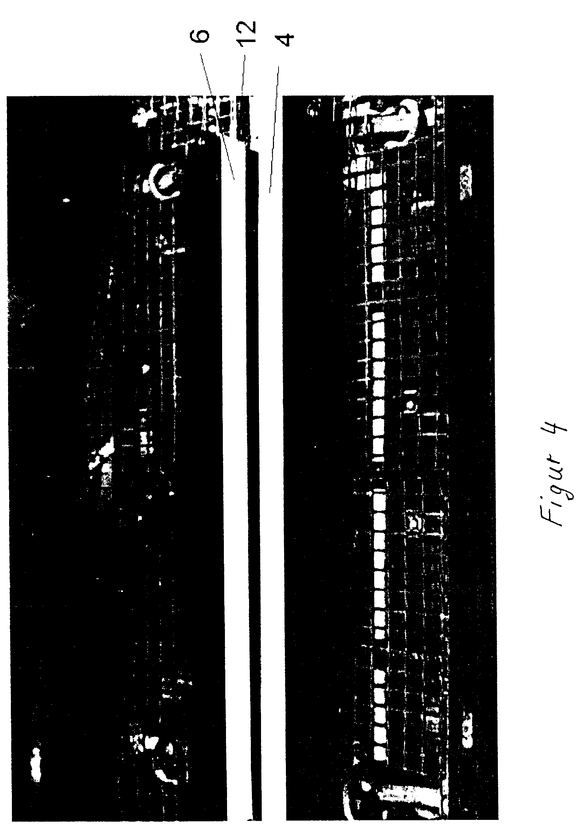

Das von der Kamera 5 aufgenommene Bild ist in Fig. 4 dargestellt. Darauf sind die scharf abgegrenzte Oberfläche des Meßlineals 4, dessen unscharfes Spiegelbild 6 und auch die seitliche Begrenzung des Bandes, der Bandrand 12, zu erkennen. Die Unschärfe im Spiegelbild rührt daher, daß bei metallischen Oberflächen ein großer Teil des einfallenden Lichtes diffus reflektierte wird. Um die Unschärfe zu kompensieren nimmt man die Stelle des steilsten Helligkeitsanstiegs bzw. -abfalls als Lage der Kanten an. Mit dem erfindungsgemäßen Meßverfahren und der erfindungsgemäßen Meßanordnung kann die Welligkeit des sich bewegenden Bandes 3 ebenfalls gemessen werden. Hierzu wird über die Bandbreite verteilt, an verschiedenen Meßstellen 11 der Abstand zum sich bewegenden Band gemessen. Wenn sich der Abstand periodisch ändert, ist das Band wellig.

### Liste der verwendeten Bezugszeichen

- 1: Gegenstand
- 2: spiegelnde Oberfläche
- 3: bewegtes Band
- 4: Meßlineal
- 5: Kamera
- 6: Spiegelbild
- 7: Abstand Meßlineal - Gegenstand
- 8: Kalibriermaß für Bandabstand
- 9: Kalibriermaß für Bandbreite
- 10: Winkel der Kamera
- 11: Meßstelle
- 12: Bandrand

## Patentansprüche

1. Verfahren zur berührungslosen und selbstkalibrierenden Abstandsmessung und Bestimmung der Breitenausdehnung eines Gegenstandes zu einer spiegelnden Oberfläche eines Bandes, bei dem
- ein Meßlineal (4) in fester und bekannter Position zum Gegenstand (1) positioniert wird, welches ein Kalibriermaß für den Bandabstand (8) aufweist,
- von einer Kamera (5) das Meßlineal (4) und dessen Spiegelbild (6) in der spiegelnden Oberfläche (2) unter ansonsten beliebigem Aufnahmewinkel (10) erfaßt wird,
- das von der Kamera (5) aufgenommene Bild unter Verwendung der Bilder der Kalibriermaße des Meßlineals und des Spiegelbilds in Echtzeit ausgewertet wird und
- der Abstand des Gegenstandes zur spiegelnden Oberfläche kontinuierlich berechnet und angezeigt und/oder weiterverarbeitet wird.

2. Verfahren nach Anspruch 1, dadurch gekennzeichnet, daß
die spiegelnde Oberfläche (2) auf beiden Seiten des sich bewegenden Bandes (3) entsteht und auf beiden Seiten die Abstände von Gegenständen (1) zum sich bewegenden Band (3) gemessen werden.

3. Verfahren nach den Ansprüchen 1 und 2,
dadurch gekennzeichnet, daß
die Kamera (5) gleichzeitig den Abstand zwischen Meßlineal (4) und Spiegelbild (6) sowie den Abstand der Meßstelle (11) vom Bandrand (12) erfaßt.

4. Verfahren nach den Ansprüchen 1, 2 und 3,
dadurch gekennzeichnet, daß
die Kamera (5) zeitgleich eine oder mehrere Meßstellen erfaßt.

5. Verfahren nach den Ansprüchen 1 und 2,
dadurch gekennzeichnet, daß
das Meßlineal (4) ein kontrastreiches Spiegelbild (6) auf dem bewegten Band (3) erzeugt.

6. Verfahren nach den Ansprüchen 1, 2, 3, und 4,
dadurch gekennzeichnet, daß
die Messung sich selbst unabhängig vom Winkel der Kamera (5) kalibiert.

7. Verfahren nach den Ansprüchen 1, 2 und 4,
dadurch gekennzeichnet, daß
der Fehler, der aus der perspektivischen Abbildung der Kamera entsteht, eliminiert wird, indem ein Mittelwert aus Kalibriermaß und Spiegelbild des Kalibriermaßes gebildet wird.

8. Verfahren nach den Ansprüchen 1 und 2,
dadurch gekennzeichnet, daß
der Gegenstand (1) selbst als Meßlineal (4) genutzt wird.

9. Verfahren nach den Ansprüchen 1 und 2,
dadurch gekennzeichnet, daß
die vertikale Position des Gegenstandes (1) aus der absoluten Position des Gegenstandes (1) im Kamerabild ermittelt wird.

10. Verfahren nach Anspruch 1, bei dem
- ein Meßlineal (4) mit einem Kalibriermaß für die Bandbreite (9) vor der spiegelnden Oberfläche (2) positioniert wird,
- von einer Kamera (5) das Meßlineal (4) und dessen Spiegelbild (6) unter ansonsten beliebigem Aufnahmewinkel (10) erfaßt wird,
- das von der Kamera aufgenommene Bild unter Verwendung der Bilder der Kailibriermaße des Meßlineals und dessen Spiegelbild ausgewertet wird und
- die Bandbreite kontinuierlich berechnet, angezeigt und/oder weiterverarbeitet wird.

11. Meßanordnung zur berührungslosen Messung des Abstandes eines Gegenstandes zu einer spiegelnden Oberfläche,
dadurch gekennzeichnet, daß
eine Kamera (5) unter einem beliebigen Winkel, vorzugsweise 45 °, und vorzugsweise in der Symmetrieachse eines bewegten Bandes (3), welches eine spiegelnde Oberfläche (2) hat, angeordnet ist und vor dem bewegten Band (3) ein Meßlineal (4) mit einer oder mehreren Meßstellen fest zugeordnet zum Gegenstand (1) angebracht wird und das Meßlineal (4) ein Spiegelbild (6) auf dem bewegten Band (3) abbildet.

12. Meßanordnung nach Anspruch 11 zur berührungslosen und selbstkalibrierenden Bestimmung der Breite eines Bandes mit spiegelnder Oberfläche mit
- einem Meßlineal (4), das ein Kalibriermaß für die Bandbreite (9) aufweist,
- einer Kamera (5), die das Meßlineal (4) und dessen Spiegelbild (6) unter ansonsten beliebigem Winkel (10) aufnimmt,
- einer Auswerteeinheit, die das von der Kamera aufgenommene Bild in Echtzeit auswertet und die Bandbreite kontinuierlich anzeigt.

13. Meßanordnung nach Anspruch 11, dadurch gekennzeichnet, daß die Meßanordnung auf beiden Seiten des bewegten Bandes (3) angebracht wird.

14. Meßanordnung nach Anspruch 11, dadurch gekennzeichnet, daß auf dem Meßlineal (4) eine oder mehrere Meßstellen (/11) gekennzeichnet sind.

15. Meßanordnung nach Anspruch 11, dadurch gekennzeichnet, daß auf dem Meßlineal (4) eine kontrasterzeugende Oberfläche bzw. Kante aufgebracht ist.

16. Meßanordnung nach Anspruch 11, dadurch gekennzeichnet, daß der Gegenstand (1) direkt das Meßlineal (4) enthält.

17. Meßanordnung nach Anspruch 11, dadurch gekennzeichnet, daß der Kamera ein Rechner und ein oder mehrere Bildschirme nachgeordnet sind.
